# EUROPÄISCHE PATENTSCHRIFT

(11) **EP 0 957 308 B1**
(45) Veröffentlichungstag und Bekanntmachung des Hinweises auf die Patenterteilung: **27.09.2006**
(21) Anmeldenummer: 99109161.2
(22) Anmeldetag: 10.05.1999
(51) Int. Cl.: F21S 8/10, B60Q 1/28

(54) **Fahrzeugleuchte**
Vehicle light
Feu pour véhicule

(30) Priorität: 15.05.1998 DE 19821837
(43) Veröffentlichungstag der Anmeldung: 17.11.1999
(73) Patentinhaber: Hella KGaA Hueck & Co., 59552 Lippstadt (DE)
(72) Erfinder: Hamelbeck, Antonius, 59609 Anröchte (DE)

(56) Entgegenhaltungen:
- DE-U- 1 668 463
- DE-U- 8 808 669
- FR-A- 1 288 842
- FR-A- 2 144 856
- GB-A- 816 784

## Beschreibung

Die Erfindung betrifft eine Fahrzeugleuchte mit einem Lampenträger für mehrere Lampen, wobei der Lampenträger elektrisch leitfähig ausgebildet ist und auf einer Innenseite einer Gehäuseabdeckung mit derselben verbunden ist, daß die Lampen jeweils in einer Aufnahme einer Gehäuseabdeckung und/oder des Lampenträgers eingesetzt sind.

Aus der gattungsgemässen DE 29 32 751 C2 ist eine Fahrzeugleuchte mit einem Lampenträger bekannt, der als U-förmiges langgestrecktes Profil auf einer Rückseite eine Reflektorgruppe befestigt ist. Der aus einem Blechstreifen hergestellte Lampenträger weist zylinderförmige Ausnehmungen auf, in denen Glühlampen lösbar angeordnet sind. Diese Ausnehmungen können in einer gemeinsamen Ebene angeordnet oder treppenförmig unter Ausbildung mehrerer paralleler Absätze ausgebildet sein. Der bekannte Lampenhalter ermöglicht zwar die Anordnung der Lampen in unterschiedlichen Ebenen, nachteilig hieran ist jedoch, daß die Rückseite der Fahrzeugleuchte infolge der stufenförmigen Kontur der Fahrzeugleuchte einen voluminösen Aufbau erfordert.

Aus der DE 31 28 868 C2 ist eine Fahrzeugleuchte mit einem Lampenträger für mehrere Lampen bekannt, wobei der Lampenträger rastend mit einer Gehäuseabdeckung verbunden ist. Der Lampenträger erstreckt sich im wesentlichen parallel zu der Gehäuseabdeckung, wobei die Gehäuseabdeckung und der Lampenträger Aufnahmen aufweisen zur Aufnahme der einzelnen Lampen. Die Gehäuseabdeckung und der Lampenträger erstrecken sich jeweils im wesentlichen in einer Ebene, wobei die Lampen rechtwinkelig herausragen. Eine mehrebenige Anordnung der Lampen ist nicht vorgesehen.

Aufgabe der vorliegenden Erfindung ist es, eine Fahrzeugleuchte mit einem Lampenträger derart weiter zu bilden, daß ein kompakter Aufbau der Fahrzeugleuchte bei versetzt angeordneten Lampen ermöglicht wird.

Zur Lösung dieser Aufgabe ist die Erfindung dadurch gekennzeichnet, daß Mittel vorgesehen sind, derart, daß eine Längsachse der Lampe einen spitzen Winkel zu der sich in einer Ebene (Gehäuseabdeckebene) erstreckenden Gehäuseabdeckung und des Lampenträgers bilden.

Durch die erfindungsgemäße Ausbildung der Gehäuseabdeckung bzw. des Lampenträgers wird ein platzsparender und kompakter Aufbau der Fahrzeugleuchte mit in Längsrichtung versetzt zueinander angeordneten Lampen erzielt. Die Rückseite der Gehäuseabdeckung, die zugleich die Rückseite der Fahrzeugleuchte bildet, weist keine unerwünschten Abwinkelungen auf, sondern ermöglicht eine einfache und platzsparende Ankopplung der Fahrzeugleuchte an benachbarte Karosserieteile des Fahrzeugs. Grundgedanke der Erfindung ist es, die Aufnahmen für die Lampen geneigt unter Bildung eines spitzen Winkels zu der Längserstreckung der Gehäuseabdeckung bzw. des Lampenträgers auszubilden. Hierdurch wird eine homogene Struktur der Rückseite der Fahrzeugleuchte gewährleistet.

Nach einer Ausgestaltung der Erfindung verläuft die Gehäuseabdeckung und der Lampenträger vertikal und horizontal jeweils unter Bildung eines spitzen Winkels zu der Längsachse der Lampe, so daß die Fahrzeugleuchte platzsparend in einem Eckbereich des Kraftfahrzeugs angeordnet sein kann und eine optimale Ausnutzung des Bauraums gegeben ist.

Nach einer Ausgestaltung der Erfindung erstrecken sich die Aufnahmen der Gehäuseabdeckung auf einer der Innenseite der Fahrzeugleuchte zugekehrten Seite der Gehäuseabdeckung, so daß die Rückseite der Gehäuseabdeckung eine ebene Struktur aufweist. Zur Ermöglichung des gewünschten Versatzes zwischen den Lampen wird der Neigungswinkel der Gehäuseabdeckung bzw. des Lampenträgers entsprechend angepaßt.

Nach einer Weiterbildung der Erfindung ist der Lampenträger rastend mit der Gehäuseabdeckung verbunden. Zur Ausrichtung und Führung des Lampenträgers sind auf der Innenseite der Gehäuseabdeckung parallel zur Längsachse der Lampen verlaufende Stege angeformt, die in korrespondierend angeordnete Führungsöffnungen des Lampenträgers eingreifen.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Figur 1: eine schematische Darstellung eines vertikalen Teilschnitts durch eine Fahrzeugleuchte,
- Figur 2: eine Seitenansicht einer Gehäuseabdeckung von oben,
- Figur 3: eine Seitenansicht der Gehäuseabdeckung nach Figur 2 in Richtung X,
- Figur 4: eine Draufsicht auf den Lampenträger und

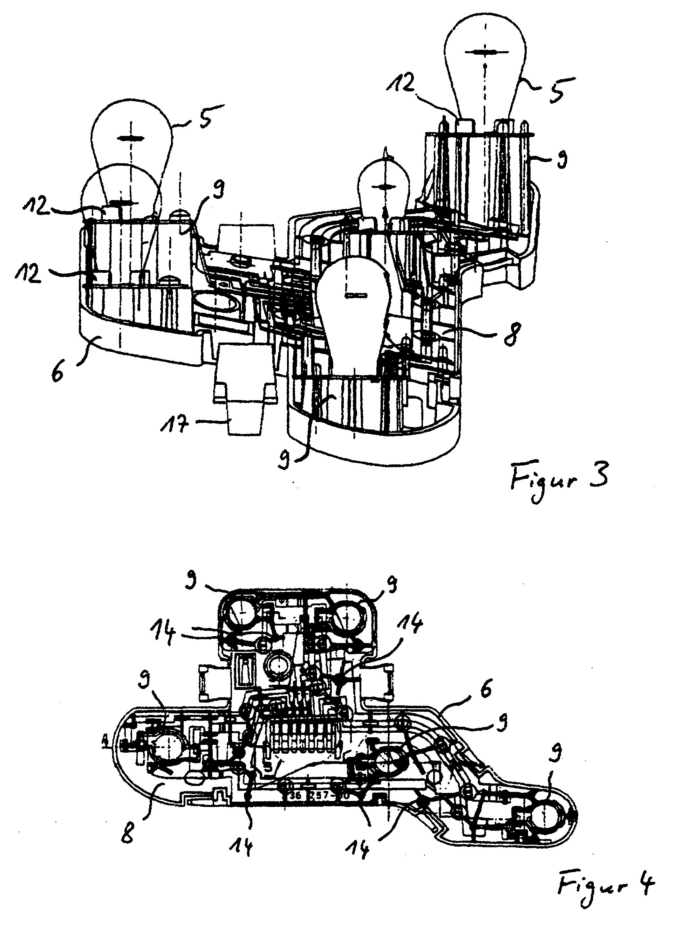

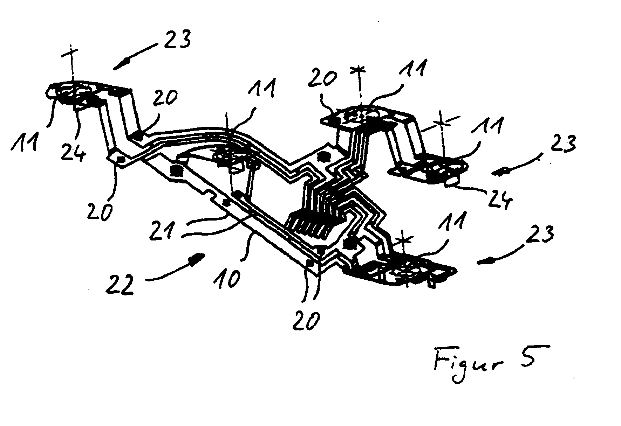

- Figur 5: eine perspektivische Darstellung eines Lampenträgers.

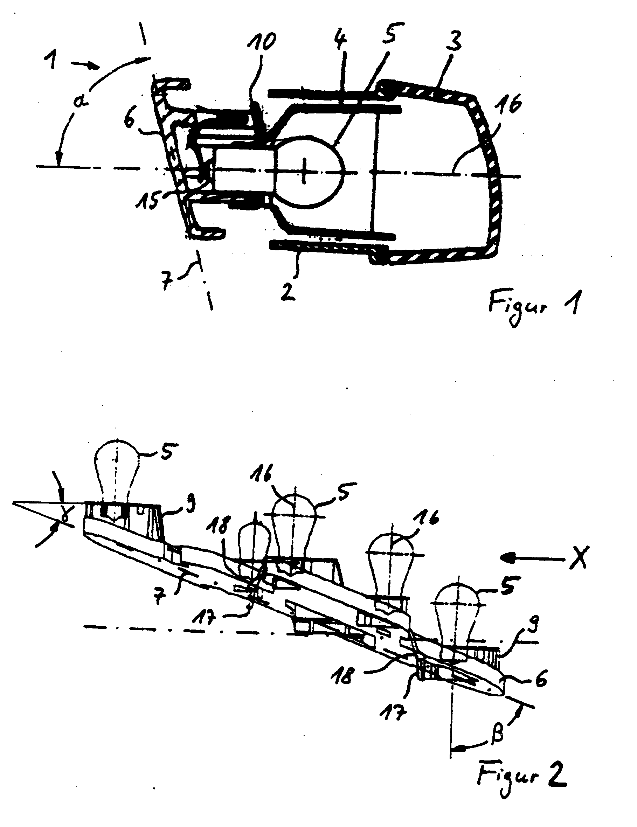

Eine in Figur 1 dargestellte Fahrzeugleuchte (1) besteht im wesentlichen aus einem Gehäuseteil (2), der zusammen mit einer Lichtscheibe (3) einen Innenraum bildet, in dem mehrere Kammern mit jeweils einem Reflektor (4) ausgebildet sind. Die Reflektoren (4) weisen jeweils eine Öffnung auf, durch die eine Lampe (5), vorzugsweise eine Glühlampe, eingesetzt ist. Die rückseitige Öffnung der Fahrzeugleuchte (1) wird durch eine Gehäuseabdeckung (6) verschlossen, die sich im wesentlichen in einer Gehäuseabdeckebene (7) erstreckt.

Auf einer dem Innenraum zugekehrten Innenseite (8) der Gehäuseabdeckung (6) sind in einem spitzen Winkel (γ) zur Gehäuseabdeckebene (7) geneigt ausgebildete Aufnahmen (9) angeformt, in die jeweils eine Lampe (5) einsetzbar sind. Zur Arretierung der Lampen (5) ist auf der Innenseite (8) der Gehäuseabdeckung (7) ein Lampenträger (10) mit zu den Aufnahmen (9) korrespondierenden Öffnungen (11) vorgesehen, der im Bereich der Öffnungen (11) klemmend oder rastend mit der Gehäuseabdeckung (6) verbunden ist. Zu diesem Zweck weisen kreisringabschnittförmige abragende Rastarme (12) der Gehäuseabdeckung (6) in korrespondierende Ausnehmungen am Rand der Öffnungen (11). Zusätzlich sind verteilt angeordnete parallel zur Erstreckung der Aufnahmen (9) ausgerichtete Stege (14) auf der Innenseite (8) der Gehäuseabdeckung (6) angeformt, die in entsprechenden Führungsöffnungen (20) des Lampenträgers (10) eingreifen und zur Führung und Positionierung desselben dienen. Durch die parallele Ausrichtung der auf der Innenseite (8) abragenden Teile, insbesondere der Aufnahmen (9) und der Stege (14) kann die Gehäuseabdeckung (6) auf einfache Weise aus Kunststoff durch Spritzgießen mittels zweier Werkzeugteile hergestellt werden.

Der Lampenträger (10) ist aus einem plattenförmigen Blechteil gestanzt und weist eine aus einer Vielzahl von Leiterbahnen (21) gebildete ebene Leiterfläche (22) auf, an der sich im Bereich der Lampen (5) abgewinkelte Aufnahmefelder (23) mit jeweils einer Öffnung (11) zur Aufnahme jeweils einer Lampe (5) anschließen. Zur Innenseite der Aufnahme (9) sind Ansätze (24) mit Aussparungen zur Ausbildung eines Bajonettverschlusses abgewinkelt, so daß im Zusammenwirken mit seitlich an den Lampen (5) abragenden Stiften eine sichere Halterung derselben gewährleistet ist. Da der Lampenträger (10) aus einem elektrisch leitfähigen Blechteil gestanzt ist, dient der Bajonettverschluß gleichzeitig als elektrischer Anschluß für die Lampe (5). Der zweite elektrische Anschluß wird durch einen von dem Lampenträger (10) freigestanzten federnden Kontaktarm gebildet, der auf den Mittelkontakt (15) der Lampe (5) drückt.

Wie aus Figur 2 zu ersehen ist, sind die Aufnahmen (9) parallel zueinander ausgerichtet, so daß Längsachsen (16) der Lampen (5) zueinander bzw. zur Längsachse des Fahrzeugs parallel verlaufen. Die Längsachsen (16) verlaufen im wesentlichen parallel zu einer Horizontalebene (H) bzw. der nicht dargestellten Fahrzeuglängsachse. Ein Versatz der Lampen (5) in vertikaler und horizontaler Richtung wird durch die Neigung der Gehäuseabdeckebene (7) um einen spitzen Winkel (a bzw. β) zu den Längsachsen (16) der Lampen (5) ermöglicht.
Der Winkel (α) verläuft in einer Vertikalebene und der Winkel (β) in einer Horizontalebene, wobei sowohl die Vertikalebene als auch die Horizontalebene parallel zu den Längsachsen (16) der Lampen (5) verlaufen.
Dadurch, daß sich die Gehäuseabdeckung (6) flächig in einer Ebene (7) erstreckt, können die Lampen (5) in unterschiedlichen Ebenen angeordnet sein. Durch Wahl des Neigungswinkels der Gehäuseabdeckebene (7) zu der Horizontalebene (H) und der Vertikalebene (V) lassen sich auf einem begrenzt zur Verfügung stehenden Bauraum eine Anzahl von in einem gleichen Abstand zur Gehäuseabdeckebene (7) angeordneter Lampen (5) positionieren. Durch die im wesentlichen in gleicher Höhe abragenden Aufnahmen (9) von der Innenseite (8) der Gehäuseabdeckung (6) kann die Gehäuseabdeckung (6) kompakt ausgebildet sein. Auch läßt sich hierdurch Material des Lampenträgers (10) einsparen, da lediglich im Bereich der Aufnahme (9) Abwinkelungen in entsprechender Höhe der Aufnahmen (9) erforderlich sind.

Zur Befestigung der Gehäuseabdeckung (6) an dem Gehäuseteil (2) weist die Gehäuseabdeckung (6) zur Rückseite hin abragende Rastarme (17) auf, die mit seitlich vorspringenden Zungen (18) in entsprechende Öffnungen eines nicht dargestellten vom Gehäuseteil (2) nach hinten abstehenden starren Haltestegs eingreifen.

## Patentansprüche

1. Fahrzeugleuchte (1) mit einem Lampenträger (10) für mehrere Lampen (5), wobei der Lampenträger (10) elektrisch leitfähig ausgebildet ist und auf einer Innenseite einer Gehäuseabdeckung (6) mit derselben verbunden ist und die Lampen (5) jeweils in einer Aufnahme (9) einer Gehäuseabdeckung (6) und/oder des Lampenträgers (10) eingesetzt sind, **dadurch gekennzeichnet, daß** Mittel (9, 23) vorgesehen sind, derart, daß eine Längsachse (16) mindestens einer Lampe (5) einen spitzen Winkel zu der sich in einer Ebene (7) erstreckenden Gehäuseabdeckung (6) und dem Lampenträger (10) bildet.

2. Fahrzeugleuchte nach Anspruch 1, **dadurch gekennzeichnet, daß** die Gehäuseabdeckung (6) auf der Innenseite (8) derselben eine Anzahl von in einem spitzen Winkel zu der Gehäuseabdeckebene (7) abragenden Aufnahmen (9) aufweist, die parallel zueinander ausgerichtet sind.

3. Fahrzeugleuchte nach Anspruch 1 oder 2, **dadurch gekennzeichnet, daß** die Aufnahmen (9) jeweils koaxial zu der Längsachse (16) der korrespondierenden Lampe (5) ausgerichtet sind und sich in Richtung der Fahrzeuglängsachse erstrecken.

4. Fahrzeugleuchte nach einem der Ansprüche 1 bis 3, **dadurch gekennzeichnet, daß** die Gehäuseabdeckebene (7) in der Vertikalen einen spitzen Winkel (α) und in der Horizontalen einen spitzen Winkel (β) zu der Längsachse (16) der Lampe (5) aufweist.

5. Fahrzeugleuchte nach einem der Ansprüche 1 bis 4, **dadurch gekennzeichnet, daß** der Lampenträger (10) eine an die Kontur der Innenseite (8) der Gehäuseabdeckung (6) angepaßte Form aufweist.

6. Fahrzeugleuchte nach einem der Ansprüche 1 bis 5, **dadurch gekennzeichnet, daß** der Lampenträger (10) rastend mit der Gehäuseabdeckung (6) verbunden ist und daß die Gehäuseabdeckung (6) verteilt angeordnete von der Innenseite (8) derselben abragende Stege (14) aufweist, die in korrespondierende Führungsöffnungen (20) des Lampenträgers (10) eingreifen.

7. Fahrzeugleuchte nach einem der Ansprüche 1 bis 6, **dadurch gekennzeichnet, daß** der Lampenträger (10) eine aus einer Vielzahl von Leiterbahnen (21) gebildete ebene Leiterfläche (22) aufweist, an der sich im Bereich der Lampen (5) abgewinkelte Aufnahmefelder (23) mit jeweils einer Öffnung (11) zur Aufnahme jeweils einer Lampe (5) anschließen.

8. Fahrzeugleuchte nach einem der Ansprüche 1 bis 7, **dadurch gekennzeichnet, daß** die Aufnahmefelder (23) jeweils einen Bajonettverschluß zur Befestigung der Lampe (5) aufweisen.

9. Fahrzeugleuchte nach einem der Ansprüche 1 bis 8, **dadurch gekennzeichnet, daß** an die Gehäuseabdeckung (6) mindestens ein federnder Rastarm (17) angeformt ist zur rastenden Verbindung mit einem Gehäuseteil (2).

10. Fahrzeugleuchte nach einem der Ansprüche 1 bis 9, **dadurch gekennzeichnet, daß** die Gehäuseabdeckung (6) aus einem Kunststoffmaterial besteht.

## Claims

1. A vehicle light (1) having a bulb carrier (10) for a plurality of bulbs (5), the bulb carrier (10) being made so as to be electrically conductive and being attached to a housing cover (6) on the inside of said housing cover (6), and each bulb (5) being inserted in a holder (9) disposed in a housing cover (6) and/or in the bulb carrier (10), **characterized in that** means (9, 23) are provided in such a way that a longitudinal axis (16) of at least one bulb (5) forms an acute angle with the housing cover (6), extending in a plane (7), and the bulb carrier (10).

2. A vehicle light according to Claim 1, **characterized in that** the housing cover (6) has, on the inside (8) of said cover (6), a number of holders (9) projecting at an acute angle to the plane (7) of the housing cover (6), said holders (9) being aligned parallel to one another.

3. A vehicle light according to Claim 1 or 2, **characterized in that** the holders (9) are each aligned coaxially with the longitudinal axis (16) of the corresponding bulb (5) and extend in direction of the longitudinal axis of the vehicle.

4. A vehicle light according to one of Claims 1 to 3, **characterized in that** the plane (7) of the housing cover (6) is at an acute angle (α) vertically and an acute angle (β) horizontally relative to the longitudinal axis (16) of the bulb (5).

5. A vehicle light according to one of Claims 1 to 4, **characterized in that** the bulb carrier (10) has a shape which is adapted to the contour of the inside (8) of the housing cover (6).

6. A vehicle light according to one of Claims 1 to 5, **characterized in that** the bulb carrier (10) is attached by snap-in means to the housing cover (6), and **in that** the housing cover (6) has projections (14) which are provided at intervals and project from the inside (8) of said cover (6), said projections (14) engaging in corresponding guide apertures (20) of the bulb carrier (10).

7. A vehicle light according to one of Claims 1 to 6, **characterized in that** the bulb carrier (10) has a flat conductive surface (22), comprising a large number of strip conductors (21), and adjoining angled holder portions (23) in the region of the bulbs (5), each of said holder portions (23) having an aperture (11) for receiving a bulb (5).

8. A vehicle light according to one of Claims 1 to 7, **characterized in that** the holder portions (23) each have a bayonet socket for fixing the bulb (5).

9. A vehicle light according to one of Claims 1 to 8, **characterized in that** at least one flexible snap-in arm (17) is formed on the housing cover (6) for snap-in connection with a housing component (2).

10. A vehicle light according to one of Claims 1 to 9, **characterized in that** the housing cover (6) is made of a plastic material.

## Revendications

1. Feu de véhicule (1) comportant un support de lampes (10) pour plusieurs lampes (5), le support de lampes (10) étant réalisé électroconducteur et étant relié à un couvercle de boîtier (6) sur une face intérieure de celui-ci et les lampes (5) étant chacune insérées dans un logement (9) d'un couvercle de boîtier (6) et/ou du support de lampes (10), **caractérisé en ce qu'**il est prévu des moyens (9, 23) de telle sorte qu'un axe longitudinal (16) d'au moins une lampe (5) forme un angle aigu avec le couvercle de boîtier (6) et le support de lampes (10) s'étendant dans un plan.

2. Feu de véhicule selon la revendication 1, **caractérisé en ce que** le couvercle de boîtier (6) présente sur la face intérieure (8) de celui-ci un certain nombre de logements (9) faisant saillie sous un angle aigu par rapport au plan (7) du couvercle de boîtier, lesquels sont orientés parallèlement les uns aux autres.

3. Feu de véhicule selon la revendication 1 ou 2, **caractérisé en ce que** les logements (9) sont alignés chacun coaxialement à l'axe longitudinal (16) de la lampe (5) correspondante et s'étendent en direction de l'axe longitudinal du véhicule.

4. Feu de véhicule selon l'une des revendications 1 à 3, **caractérisé en ce que** le plan (7) du couvercle de boîtier forme à la verticale un angle aigu (α) et à l'horizontale un angle aigu (β) par rapport à l'axe longitudinal (16) de la lampe (5).

5. Feu de véhicule selon l'une des revendications 1 à 4, **caractérisé en ce que** le support de lampes (10) présente une forme adaptée au contour de la face intérieure (8) du couvercle de boîtier (6).

6. Feu de véhicule selon l'une des revendications 1 à 5, **caractérisé en ce que** le support de lampes (10) est relié par enclenchement au couvercle de boîtier (6) et **en ce que** le couvercle de boîtier (6) présente des barrettes (14) agencées de manière répartie en saillie depuis la face intérieure (8) de celui-ci, lesquelles barrettes s'engagent dans des ouvertures de guidage (20) correspondantes du support de lampes (10).

7. Feu de véhicule selon l'une des revendications 1 à 6, **caractérisé en ce que** le support de lampes (10) présente une surface de conducteur (22) plane formée par une multitude de pistes conductrices (21), surface à laquelle se raccordent des champs de réception (23) coudés dans la région des lampes (5), avec chacun une ouverture (11) pour recevoir une lampe (5).

8. Feu de véhicule selon l'une des revendications 1 à 7, **caractérisé en ce que** les champs de réception (23) présentent chacun une fermeture à baïonnette pour fixer la lampe (5).

9. Feu de véhicule selon l'une des revendications 1 à 8, **caractérisé en ce que** sur le couvercle de boîtier (6) est conformé au moins un bras d'enclenchement (17) pour établir une liaison par enclenchement avec une partie de boîtier (2).

10. Feu de véhicule selon l'une des revendications 1 à 9, **caractérisé en ce que** le couvercle de boîtier (6) est en matière plastique.
